# EUROPEAN PATENT SPECIFICATION

(11) **EP 2 153 719 B1**
(45) Date of publication and mention of the grant of the patent: **22.10.2014**
(21) Application number: 09159366.5
(22) Date of filing: 05.05.2009
(51) Int. Cl.: A01N 25/00, A01N 25/08, A01N 25/10, A01N 43/16, A01P 11/00

(54) **Rodenticidal bait and use thereof**
Rodentizidköder und dessen Verwendung
Appât pour tuer les rongeurs et ses utilisations

(30) Priority: 06.08.2008 IT TV20080105
(43) Date of publication of application: 17.02.2010
(73) Proprietor: Mayer Braun Deutschland S.R.L., 31030 Carbonera (TV) (IT)
(72) Inventor: Flatres, Christiane, 31030 Carbonera TV (IT)
(74) Representative: Modiano, Micaela Nadia

(56) References cited:
- EP-A- 1 279 334
- EP-A1- 1 849 358
- FR-A- 2 288 464
- GB-A- 2 115 698

## Description

The present invention relates to a rodenticidal bait and to the use of such bait to combat infestations caused by mice and rats.

It is known that rodents such as mice and rats are creatures that are extremely adaptable and are capable of living parasitically at the expense of man's food resources, further causing, with their presence, substantial hygiene and sanitary problems.

Over the years, various methods for eradicating infestations of mice or rats in environments inhabited by human beings have been developed.

In particular, one of the various methods used resorts to toxic substances that are capable of killing mice and rats.

The development of products having a rodenticidal action based on these toxic substances, however, must take into account some particularities of the behavior of rodents.

Rodents in fact tend to ingest small quantities of food and to wait for them to turn out to be harmless before eating them again.

As a consequence of this, for products having a rodenticidal action to be effective, it is necessary to make the product palatable for rodents and to ensure that the rodents eat the product in the long term.

These problems have been solved for example by using rodenticidal baits in the form of a paste that comprise substances that are palatable for rodents and are mixed with toxic substances such as anticoagulants, which have a delayed toxic effect instead of an instantaneous one.

However, it has been observed that these baits are not always effective, since rodent populations may eat them in limited quantities.

In order to obviate this drawback, baits in the form of a paste have been provided which comprise a solid component in the form of cereals, fruit or vegetables.

The presence of this solid component, which can be nibbled by rodents, makes the bait more palatable.

Although these baits containing a solid food component are effective, the increasingly widespread diffusion of rodents in areas inhabited by human beings leads to the need to provide further new types of rodenticidal bait capable of attracting rodents and facilitating their elimination.

EP-A-1 279 334 discloses a rodenticide comprising a component in the form of an appetizing paste, and a component in solid form suitable for being gnawed by a rodent comprising cereals, fruits, vegatables and solid flour aggregates in a form suitable for being gnawed by a rodent. The rodenticide can also incorporate onr or more inerts components in solid form which are suitable for being gnawed by rodents, such as peices of wook, cork, sawdust, plastic, etc.

FR-A-2 288 464 discloses a rodenticide composition consisting of expanded polystyrene pearls between which particles of attractive components and a harmful product are trapped.

GB2115698 discloses a rodenticidal hard bait-block comprising 4-30 % brittle hard polymer, foodstuff and a rodenticide. EP1849358 discloses a rodenticidal agent comprising a binding component embodied as a thermoplastic.

The aim of the present invention is to provide a rodenticidal bait that is palatable for rodents.

Within this aim, an object of the invention is to provide a bait having a solid component that can be nibbled by rodents and is not constituted by food-type substances.

Another object of the invention is to provide a rodenticidal bait that is highly reliable, relatively easy to provide and at competitive costs.

In accordance with the invention, there is provided a rodenticidal bait as defined in the appended claims.

The above aim and objects of the invention are also achieved by the use of the rodenticidal bait described here as a mouse or rat poison.

Further objects, characteristics and advantages of the invention will become better apparent in the following detailed description.

According to the invention, the rodenticidal bait comprises a solid component, the presence of which is believed to facilitate eating by rodents of such bait, since the solid

Surprisingly, the inventors of the present invention have discovered that the addition of a plastic as solid component in the formulation of the rodenticidal bait is adapted to give the bait the desired characteristics of palatability for rodents.

In a preferred embodiment of the present invention, plastics can be selected from the group constituted by high-density polyethylene (HDPE) and expanded polystyrene (EPS).

Polyethylene is a thermoplastic polymer obtained from the polymerization of the ethene monomer.

Polyethylene is transparent or white depending on whether its nature is respectively amorphous or crystalline and is characterized in particular by considerable insulating and chemical stability properties which make such plastic extremely versatile.

Polyethylene is in fact used as an insulator, for example in the provision of electrical cables, and as raw material for the provision of plastic objects, including bags and pouches, tubes and containers for food.

Depending on the molecular weight obtained during polymerization of the polyethylene, the resulting polymer is classed as ultrahigh-molecular-weight polyethylene (UHMWPE), high-density polyethylene (HDPE), low-density polyethylene (LDPE) and linear low-density polyethylene (LLDPE).

Since the molecular weight affects the properties of the polymer, for example the mechanical properties, UHMWPE, HDPE, LDPE and LLDPE can be used for mutually different purposes depending on the requirements of the particular application.

Polystyrene also is a thermoplastic polymer.

It is prepared by polymerization of the styrene monomer.

Polystyrene is inert with respect to various corrosive chemicals and is soluble in organic solvents, for example chlorinated solvents.

Polystyrene can be expanded (EPS) or expanded-extruded (XPS).

In particular, EPS is prepared starting from polystyrene in an expansion process that provides for the use of an agent, for example pentane, with which swelling of the material when subjected to an appropriate thermal treatment is obtained.

The plastic used as a solid component in the rodenticidal bait of the present invention is in the form of granules. For example, 30 the plastic can be HDPE in the form of granules with a size distribution between 2 and 4 mm. In an alternative embodiment, the plastic can be EPS in the form of granules with a size distribution between 2 and 5 mm.

The rodenticidal bait according to the present invention comprises plastic in a quantity between 0.2% and 3% by weight on the weight of the bait.

In one embodiment, the plastic is high-density polyethylene in a quantity equal to 2.9% by weight on the weight of the bait.

In an alternative embodiment, the plastic is expanded polystyrene in a quantity equal to 0.25% by weight on the weight of the bait.

The bait described here preferably but not exclusively uses as active rodenticidal ingredient a second-generation anticoagulant derived from 4-hydroxycoumarin, such as brodifacoum (IUPAC 3-(3-(4'-bromodiphenyl-4-yl)-1,2,3,4-tetrahydro-1-naphthyl)-4-hydroxycoumarin).

Brodifacoum acts by inhibiting a key enzyme that is necessary in the synthesis of coagulation factors and by damaging the capillaries of the circulatory system so as to cause internal hemorrhages.

Moreover, brodifacoum, like other anticoagulants, causes dehydration, inducing rodents that have eaten some to move away from the location where the poison was deposited in search of water.

In one embodiment, the rodenticidal bait according to the present invention can comprise brodifacoum in a quantity from 0.0045% to 0.0055% by weight on the weight of the bait, preferably 0.0050% by weight of the weight of the bait.

As mentioned earlier, the rodenticidal bait described here comprises a component in the form of a paste, which in turn comprises a vegetable flour. In one embodiment, such vegetable flour can be for example common wheat flour.

Further, the rodenticidal bait according to the present invention can comprise one or more additional ingredients.

These additional ingredients can be one or more additives selected from the group constituted by a repellent, a preservative, an aroma, a color, an animal fat and a vegetable oil.

For example, a repellent substance can be added to the formulation of the rodenticidal bait in order to give the product a bitter taste that makes the bait repellent for human taste.

In this manner it is possible to avoid or otherwise limit ingestion by human beings of the extremely toxic rodenticidal agent that is comprised within the bait.

In one embodiment of the present invention, the repellent can be denatonium benzoate, a substance that is known for being characterized by the highest degree of bitterness.

For example, denatonium benzoate can be comprised in the rodenticidal bait in a quantity from 0.0009% to 0.0011% by weight on the weight of the bait, preferably 0.0010% by weight on the weight of the bait.

Of course, the rodenticidal bait can further comprise a material having the function of a wrapper, preferably paper. The paper can be for example filter paper, such as the paper used to provide bags for infusions, or paper gauze.

The invention will now be described further by means of examples whose content must be considered non-limiting for the scope of the protection of the appended claims.

### Example 1

A rodenticidal bait (Brodimax Forte Pasta with EPS) was prepared by using the ingredients listed hereafter. The quantities of each ingredient that are indicated correspond to the quantities contained in 1000 kg of product:

| | |
|---|---|
| Common wheat flour | 740.95 kg |
| Expanded polystyrene (EPS) | 2.45 kg |
| Pork lard | 74.09 kg |
| Mixed seed oil | 103.73 kg |
| Brodifacoum 0.25% + Denatonium benzoate 0.05% | 22.23 kg |
| Molasses | 41.49 kg |
| Anoxid (preservative) | 0.89 kg |
| Para-methyl (preservative) | 0.89 kg |
| Aroma | 1.48 kg |
| Blue color | 0.36 kg |
| Red color | 0.18 kg |
| Sachet paper | 11.26 kg |

### Example 2

A rodenticidal bait (Brodimax Forte Pasta with HDPE) was prepared by using the ingredients listed hereafter.

The quantities of each ingredient that are indicated correspond to the quantities contained in 1000 kg of product:

| | |
|---|---|
| Common wheat flour | 721.33 kg |
| High-density polyethylene (HDPE) | 28.85 kg |
| Pork lard | 72.13 kg |
| Mixed seed oil | 100.99 kg |
| Brodifacoum 0.25% + Denatonium benzoate 0.05% | 21.64 kg |
| Molasses | 40.39 kg |
| Anoxid (preservative) | 0.87 kg |
| Para-methyl (preservative) | 0.87 kg |
| Aroma | 1.44 kg |
| Blue color | 0.35 kg |
| Red color | 0.17 kg |
| Sachet paper | 10.96 kg |

In practice it has been found that the rodenticidal bait according to the invention fully achieves the proposed aim, since by being palatable for rodents it makes such animals eat lethal quantities of the active ingredient, thus facilitating the eradication of infestations of mice or rats.

## Claims

1. A rodenticidal bait comprising a rodenticidal active ingredient, a component in the form of a paste comprising vegetable flour, and a solid component, **characterized in that** said solid component is a plastic in the form of granules in a quantity between 0.2 and 3% by weight on the weight of the bait.

2. The rodenticidal bait according to claim 1, wherein said rodenticidal active ingredient consists of brodifacoum and said plastic is selected from the group consisting of high-density polyethylene (HDPE) and expanded polystyrene (EPS).

3. The rodenticidal bait according to claim 1 or 2, wherein said plastic is HDPE in the form of granules with a size distribution between 2 and 4 mm.

4. The rodenticidal bait according to claim 1 or 2, wherein said plastic is EPS in the form of granules with a size distribution between 2 and 5 mm.

5. The rodenticidal bait according to one or more of the preceding claims 1 to 3, wherein the plastic is HDPE in a quantity equal to 2.9% by weight on the weight of the bait.

6. The rodenticidal bait according to one or more of the preceding claims 1, 2 and 4, wherein the plastic is EPS in a quantity equal to 0.25% by weight on the weight of the bait.

7. The rodenticidal bait according to claim 2, wherein the brodifacoum is in a quantity between 0.0045% and 0.0055% by weight on the weight of the bait.

8. The rodenticidal bait according to claim 7, wherein the quantity of brodifacoum is equal to 0.0050% by weight on the weight of the bait.

9. The rodenticidal bait according to one or more of the preceding claims, wherein the vegetable flour is common wheat flour.

10. The rodenticidal bait according to one or more of the preceding claims, **characterized that** it comprises one or more additives selected from the group consisting of a repellent, a preservative, an aroma, a color, an animal fat and a vegetable oil.

11. The rodenticidal bait according to claim 10, wherein the repellent is denatonium benzoate.

12. The rodenticidal bait according to claim 11, wherein the denatonium benzoate is in a quantity between 0.0009% and 0.0011% by weight on the weight of the bait.

13. The rodenticidal bait according to claim 12, wherein the quantity of denatonium benzoate is equal to 0.0010% by weight on the weight of the bait.

14. The use of the rodenticidal bait according to one or more of claims 1-13 as a mouse or rat poison.

## Patentansprüche

1. Ein rodentizider Köder umfassend einen rodentizid wirksamen Inhaltsstoff, eine Komponente in der Form einer Paste umfassend pflanzliches Mehl, und eine feste Komponente, **dadurch gekennzeichnet, dass** die feste Komponente ein Kunststoff ist in der Form von Körnchen in einer Menge zwischen 0, 2 und 3 Gewichtsprozent bezogen auf das Gewicht des Köders.

2. Der rodentizide Köder gemäß Anspruch 1, worin der rodentizid wirksame Inhaltsstoff aus Brodifacoum besteht und der Kunststoff gewählt ist aus der Gruppe bestehend aus Polyethylen mit hoher Dichte (HDPE) und expandiertem Polystyrol (EPS).

3. Der rodentizide Köder gemäß Anspruch 1 oder 2, worin der Kunststoff HDPE in der Form von Körnchen ist mit einer Größenverteilung zwischen 2 und 4 mm.

4. Der rodentizide Köder gemäß Anspruch 1 oder 2, worin der Kunststoff EPS in der Form von Körnchen ist mit einer Größenverteilung zwischen 2 und 5 mm.

5. Der rodentizide Köder gemäß einem oder mehreren der vorhergehenden Ansprüche 1 bis 3, worin der Kunststoff HDPE ist in einer Menge gleich 2, 9 Gewichtsprozent bezogen auf das Gewicht des Köders.

6. Der rodentizide Köder gemäß einem oder mehreren der vorhergehenden Ansprüche 1, 2 und 4, worin der Kunststoff EPS ist in einer Menge gleich 0,25% Gewichtsprozent bezogen auf das Gewicht des Köders.

7. Der rodentizide Köder gemäß Anspruch 2, worin das Brodifacoum in einer Menge zwischen 0,0045 Gewichtprozent und 0,0055 Gewichtsprozent bezogen auf das Gewicht des Köders vorliegt.

8. Der rodentizide Köder gemäß Anspruch 7, worin die Menge an Brodifacoum gleich 0,0050 Gewichtsprozent bezogen auf das Gewicht des Köders ist.

9. Der rodentizide Köder gemäß einem oder mehreren der vorhergehenden Ansprüche, worin das pflanzliche Mehl herkömmliches Weizenmehl ist.

10. Der rodentizide Köder gemäß einem oder mehreren der vorhergehenden Ansprüche, **dadurch gekennzeichnet, dass** er einen oder mehrere Zusatzstoffe umfasst, gewählt aus der Gruppe bestehend aus einem Abwehrmittel, einem Konservierungsmittel, einem Aroma, einer Farbe, einem tierischen Fett und einem pflanzliche Öl.

11. Der rodentizide Köder gemäß Anspruch 10, worin das Abwehrmittel Denatoniumbenzoat ist.

12. Der rodentizide Köder gemäß Anspruch 11, worin das Denatoniumbenzoat in einer Menge zwischen 0,0009 Gewichtsprozent und 0,0011 Gewichtsprozent bezogen auf das Gewicht des Köders vorliegt.

13. Der rodentizide Köder gemäß Anspruch 12, worin die Menge an Denatoniumbenzoat gleich 0,0010 Gewichtsprozent bezogen auf das Gewicht des Köders ist.

14. Die Verwendung des rodentiziden Köders gemäß einem oder mehreren der Ansprüche 1-13 als ein Mäuse- oder Rattengift.

## Revendications

1. Appât rodenticide comprenant un ingrédient actif rodenticide, un composant sous la forme d'une pâte comprenant une farine végétale, et un composant solide, **caractérisé en ce que** ledit composant solide est un plastique sous la forme de granules en une quantité comprise entre 0,2 et 3 % en poids par rapport au poids de l'appât.

2. Appât rodenticide selon la revendication 1, dans lequel ledit ingrédient actif rodenticide consiste en le brodifacoum et ledit plastique est sélectionné dans le groupe consistant en le polyéthylène de haute densité (PEHD) et le polystyrène expansé (PSE).

3. Appât rodenticide selon la revendication 1 ou 2, dans lequel ledit plastique est le PEHD sous la forme de granules avec une distribution de taille comprise entre 2 et 4 mm.

4. Appât rodenticide selon la revendication 1 ou 2, dans lequel ledit plastique est le PSE sous la forme de granules avec une distribution de taille comprise entre 2 et 5 mm.

5. Appât rodenticide selon l'une ou plusieurs des revendications 1 à 3 précédentes, dans lequel le plastique est le PEHD en une quantité égale à 2,9 % en poids par rapport au poids de l'appât.

6. Appât rodenticide selon l'une ou plusieurs des revendications 1, 2 et 4 précédentes, dans lequel le plastique est le PSE en une quantité égale à 0,25 % en poids par rapport au poids de l'appât.

7. Appât rodenticide selon la revendication 2, dans lequel le Brodifacoum est présent en une quantité comprise entre 0,0045 % et 0,0055 % en poids par rapport au poids de l'appât.

8. Appât rodenticide selon la revendication 7, dans lequel la quantité de brodifacoum est égale à 0,0050 % en poids par rapport au poids de l'appât.

9. Appât rodenticide selon l'une ou plusieurs des revendications précédentes, dans lequel la farine végétale est une farine de blé tendre.

10. Appât rodenticide selon l'une ou plusieurs des revendications précédentes, **caractérisé en ce qu'**il comprend un ou plusieurs additifs sélectionnés dans le groupe consistant en un répulsif, un conservateur, un arôme, un colorant, une graisse animale et une huile végétale.

11. Appât rodenticide selon la revendication 10, dans lequel le répulsif est le benzoate de dénatonium.

12. Appât rodenticide selon la revendication 11, dans lequel le benzoate de dénatonium est présent en une quantité comprise entre 0,0009 % et 0,0011 % en poids par rapport au poids de l'appât.

13. Appât rodenticide selon la revendication 12, dans lequel la quantité de benzoate de dénatonium est égale à 0,0010 % en poids par rapport au poids de l'appât.

14. Utilisation de l'appât rodenticide selon l'une ou plusieurs des revendications 1 à 13 en tant que poison à souris ou à rat.
